# EUROPEAN PATENT APPLICATION

(11) **EP 3 992 912 A1**
(43) Date of publication of application: **04.05.2022**
(21) Application number: 20205329.4
(22) Date of filing: 03.11.2020
(51) Int. Cl.: G06T 11/00

(54) **METHODS AND SYSTEMS FOR GENERATING A SPECTRAL COMPUTED TOMOGRAPHY IMAGE**

(71) Applicant: Koninklijke Philips N.V., 5656 AG Eindhoven (NL)
(72) Inventor: FRERKING, Lena Christina, 5656 AE Eindhoven (NL); KOEHLER, Thomas, 5656 AE Eindhoven (NL); DAERR, Heiner, 5656 AE Eindhoven (NL)
(74) Representative: Philips Intellectual Property & Standards

(57) **Abstract**

The invention provides a method for obtaining a spectral computed tomography, CT, image of a region of interest from CT projection data acquired by way of a CT imaging system. The method includes obtaining a first set of CT projection data, acquired by way of an X-ray tube operated at a first voltage, wherein the first set of CT projection data is representative of an image having a first resolution and obtaining a second set of CT projection data, acquired by way of an X-ray tube operated at a second voltage, the second voltage being higher than the first voltage, wherein the second set of CT projection data is representative of an image having a second resolution, wherein the second resolution is lower than the first resolution.

A low-pass filter is applied to the first set of CT projection data, thereby generating a filtered first set of CT projection data, wherein the filtered first set of CT projection data is representative of an image having a resolution closer to the second resolution than the first resolution. A spectral CT image is generated based on the filtered first set of CT projection data and the second set of CT projection data.

## Description

### FIELD OF THE INVENTION

The invention relates to the field of computed tomography imaging, and more specifically to the field of spectral computed tomography imaging.

### BACKGROUND OF THE INVENTION

Spectral imaging is becoming an increasingly popular imaging methodology of X-ray computed tomography. Spectral imaging is performed by applying different energy settings, such as different voltages, to an X-ray tube, which results in different X-ray spectra being provided to a subject. In this way, quantitative image data may be obtained that allows a decomposition of a scanned object, such as a subject's body, into different materials and tissues.

One of the methods for performing spectral imaging is kVp switching, wherein two different voltages are alternately applied across an X-ray tube. The fast change of X-ray tube supply voltage, by fast kVp switching, is an efficient and inexpensive way to accomplish spectral imaging. The overall measurements can be split into two different sinograms, one consisting of those measurements taken with the high energy spectrum and the other one taken with the low energy spectrum.

Due to the different voltages applied across the X-ray tube during kVp switching, the focal spot of the X-ray tube has different sizes during the high energy imaging sequence and the low energy imaging sequence. X-ray tubes may be provided with dedicated hardware that controls the focal spot size. However, conventional hardware for controlling the focal spot size of an X-ray tube is typically designed for a constant tube voltage and is unsuitable for controlling the focal spot sizing where the voltage applied across the X-ray tube is switching rapidly. Significant additional hardware would be required to control the focal spot size if the tube voltage is being switched rapidly, which introduces additional costs and complexity to the manufacture of the X-ray tubes.

Taking the effects of voltage on the focal spot of an X-ray tube in isolation, in the case where no further means of shaping the focal spot are considered, the focal spot is smaller for lower voltages than for higher voltages. The disparity in focal spot size results in varying resolutions of the sinograms, wherein smaller focal spots lead to higher resolution sinograms than large focal spots.

For the decomposition of the CT image data into different materials, it is assumed that the two samples input into the decomposition represent the same line integral. Accordingly, if the samples are obtained by averaging over different focal spot sizes, this assumption is no longer correct, especially around the tissue boundaries. This often causes visible artifacts in the output images when the two image sets are combined.

### SUMMARY OF THE INVENTION

The invention is defined by the claims.

According to examples in accordance with an aspect of the invention, there is provided a method for obtaining a spectral computed tomography, CT, image of a region of interest from CT projection data acquired by way of a CT imaging system, the method comprising:
obtaining a first set of CT projection data, acquired by way of an X-ray tube operated at a first voltage, wherein the first set of CT projection data is representative of an image having a first resolution;
obtaining a second set of CT projection data, acquired by way of an X-ray tube operated at a second voltage, the second voltage being higher than the first voltage, wherein the second set of CT projection data is representative of an image having a second resolution, wherein the second resolution is lower than the first resolution;
applying a low-pass filter to the first set of CT projection data, thereby generating a filtered first set of CT projection data, wherein the filtered first set of CT projection data is representative of an image having a resolution closer to the second resolution than the first resolution; and
generating a spectral CT image based on the filtered first set of CT projection data and the second set of CT projection data.

The method provides a means of generating a spectral computed tomography (CT) image with a reduced number of image artifacts.

Spectral CT images are constructed from multiple sets of CT projection data, also referred to as sinograms, obtained at different energies. The different acquisition energies for obtaining the CT projection data result in CT projection data sets representing images having differing resolutions due to the different focal spot sizes caused by the different imaging energies. The combination of projection data sets, or sinograms, representing images having differing resolutions results in image artifacts in the final image.

By applying a low-pass filter to the first set of CT projection data, which is acquired at a lower energy, the high frequency components of the first set of CT projection data are removed, thereby bringing the resolution of the first set of CT projection data closer to the resolution of the second set of CT projection data, thereby removing artifacts due to the combination of projection having differing resolutions from the final spectral CT projection data.

In an embodiment, applying the low-pass filter to the first set of CT projection data comprises convolving the first set of CT projection data with a filter kernel.

In an embodiment, the filter kernel is one dimensional.

In this way, the structure of the first set of CT projection data is preserved during the filtering process.

In an embodiment, the values of the filter kernel are positive.

In this way, the resolution of the image represented by the first set of CT projection data is reduced to match the resolution of the image represented by the second set of CT projection data.

In an embodiment, the method further comprises:
determining a relationship between a fan-angle of the CT imaging system and a resolution difference between the first resolution and the second resolution based on the; and
adjusting the low-pass filter based on the determined relationship between the fan-angle and the resolution difference.

In this way, the low-pass filter may be optimized based on the fan-angle of the CT imaging system, which affects the effective focal spot size of the system. The fan-angle of a CT imaging system defines the spread of the X-rays generated when obtaining a set of CT projection data.

In an embodiment, the first set of CT projection data and the second set of CT projection data are obtained by way of kVp switching.

In an embodiment, the method further comprises applying a filter to the second set of CT projection data.

In an embodiment, the region of interest has been provided with a contrast agent.

In an embodiment, the contrast agent is an iodine-based contrast agent.

According to examples in accordance with an aspect of the invention, there is provided a computer program product comprising computer program code means which, when executed on a computing device having a processing system, cause the processing system to perform all of the steps of the method described above.

According to examples in accordance with an aspect of the invention, there is provided a processor for use in a computed tomography, CT, imaging system, wherein the processor is adapted to:
obtain a first set of CT projection data, acquired from a region of interest by way of an X-ray tube operated at a first voltage, wherein the first set of CT projection data is representative of an image having a first resolution;
obtain a second set of CT projection data, acquired from the region of interest by way of an X-ray tube operated at a second voltage, the second voltage being higher than the first voltage, wherein the second set of CT projection data is representative of an image having a second resolution, wherein the second resolution is lower than the first resolution;
apply a low-pass filter to the first set of CT projection data, thereby generating a filtered first set of CT projection data, wherein the filtered first set of CT projection data is representative of an image having a resolution closer to the second resolution than the first resolution; and
generate a spectral CT image based on the filtered first set of CT projection data and the second set of CT projection data.

In an embodiment, computed tomography, CT, imaging system adapted to obtain a spectral CT image of a subject, the system comprising:
processor as described above;
a radiation source comprising an X-ray tube, adapted to provide radiation to the subject; and
a detector adapted to detect radiation generated by the radiation source.

In an embodiment, the processor is adapted, when applying the low-pass filter to the first set of CT projection data, to convolve the first set of CT projection data with a filter kernel.

In an embodiment, the processor is further adapted to:
determine a dependence of resolution mismatch on the fan-angle of the CT imaging system; and
adjust the low-pass filter based on the determined dependence of resolution mismatch on the fan-angle.

In an embodiment, the system further comprises a display for displaying the spectral CT image to a user.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 schematically illustrates a CT imaging system;
Figure 2 shows schematic image simulations, representative of CT projection data acquired with different focal spot sizes, and a schematic difference image illustrating the difference between the schematic image simulations;
Figure 3 shows a method of the invention; and
Figure 4 shows an illustration of the difference between a spectral CT image generated from projection data sets when the method of Figure 3 has been applied and when the method of Figure 3 has not been applied.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for obtaining a spectral computed tomography, CT, image of a region of interest from CT projection data acquired by way of a CT imaging system. The method includes obtaining a first set of CT projection data, acquired by way of an X-ray tube operated at a first voltage, wherein the first set of CT projection data is representative of an image having a first resolution and obtaining a second set of CT projection data, acquired by way of an X-ray tube operated at a second voltage, the second voltage being higher than the first voltage, wherein the second set of CT projection data is representative of an image having a second resolution, wherein the second resolution is lower than the first resolution.

A low-pass filter is applied to the first set of CT projection data, thereby generating a filtered first set of CT projection data, wherein the filtered first set of CT projection data is representative of an image having a resolution closer to the second resolution than the first resolution. A spectral CT image is generated based on the filtered first set of CT projection data and the second set of CT projection data.

A conventional computed tomography (CT) scanner includes an X-ray radiation generator mounted on a rotatable gantry opposite one or more integrating detectors. The X-ray generator rotates around an examination region located between the X-ray generator and the one or more detectors and emits (typically polychromatic) radiation that traverses the examination region and a subject and/or object disposed in the examination region. The one or more detectors detect radiation that traverses the examination region and generate a signal (or projection data) indicative of the examination region and the subject and/or object disposed therein. The projection data refers to the raw detector data, and can be used to form a projection sinogram, the latter being a visual representation of the projection data captured by the detector(s).

A reconstructor is typically further used to process the projection data and reconstruct a volumetric image of the subject or object. The volumetric image is composed of a plurality of cross-sectional image slices which are each generated from the projection data through a process of tomographic reconstruction, such as through application of a filtered back projection algorithm. The reconstructed image data is effectively an inverse radon transform of the projection data.

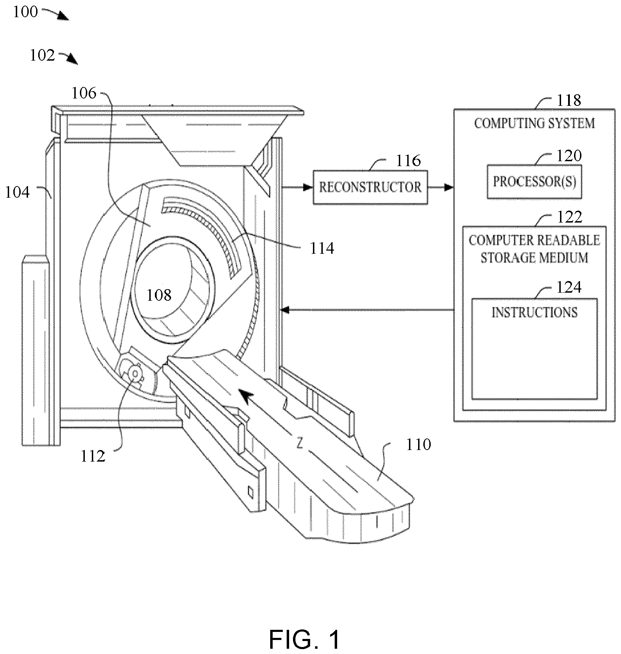

Figure 1 schematically illustrates a system 100 including an imaging system 102 such as a CT scanner configured for spectral (multi-energy) imaging. The imaging system 102 includes a generally stationary gantry 104 and a rotating gantry 106, which is rotatably supported by the stationary gantry 104 and rotates around an examination region 108 about a z-axis. A subject support 110, such as a couch, supports an object or subject in the examination region 108.

A radiation source 112, such as an X-ray tube, is rotatably supported by the rotating gantry 106, rotates with the rotating gantry 106, and emits radiation that traverses the examination region 108. The radiation source 112 includes a single X-ray tube configured to switch between at least two different emission voltages (e.g., 80 kVp and 140 kVp) during scanning. In yet another instance, the radiation source 112 includes two or more X-ray tubes configured to emit radiation having different mean spectra. In still another instance, the radiation source 112 includes a combination thereof.

A radiation sensitive detector array 114 is placed opposite the radiation source 112 across the examination region 108. The radiation sensitive detector array 114 detects radiation traversing the examination region 108 and generates an electrical signal(s) (projection data) indicative thereof. With kVp switching and multi-tube configurations, the detector array 114 can include single layer detectors, direct conversion photon counting detectors, and/or multi-layer detectors. The direct conversion photon counting detectors may include a conversion material such as CdTe, CdZnTe, Si, Ge, GaAs, or other direct conversion material. An example of multi-layer detector includes a double decker detector such as the double decker detector described in US patent 7,968,853 B2, filed April 10, 2006, and entitled "Double Decker Detector for Spectral CT".

For kVp switching, the radiation source is operated at a first voltage and a second voltage, wherein the first voltage is lower than the second voltage. When the radiation source is operated at the first voltage, the detector will obtain a first sinogram containing the first set of CT projection data. When the radiation source is operated at the second voltage, the detector will obtain a second sinogram containing the second set of CT projection data.

A reconstructor 116 receives the first and second sinograms from the detector array 114 and reconstructs spectral volumetric image data such as CCTA image data, a high-energy image, a low energy image, a photoelectric image, a Compton scatter image, an iodine image, a calcium image, a virtual non-contrast image, a bone image, a soft tissue image, and/or other basis material image. The reconstructor 116 can also reconstruct non-spectral volumetric image data, e.g., by combining spectral projection data and/or spectral volumetric image data. Generally, the spectral projection data and/or spectral volumetric image data will include data for either at least two different energies and/or energy ranges or at least two different material bases.

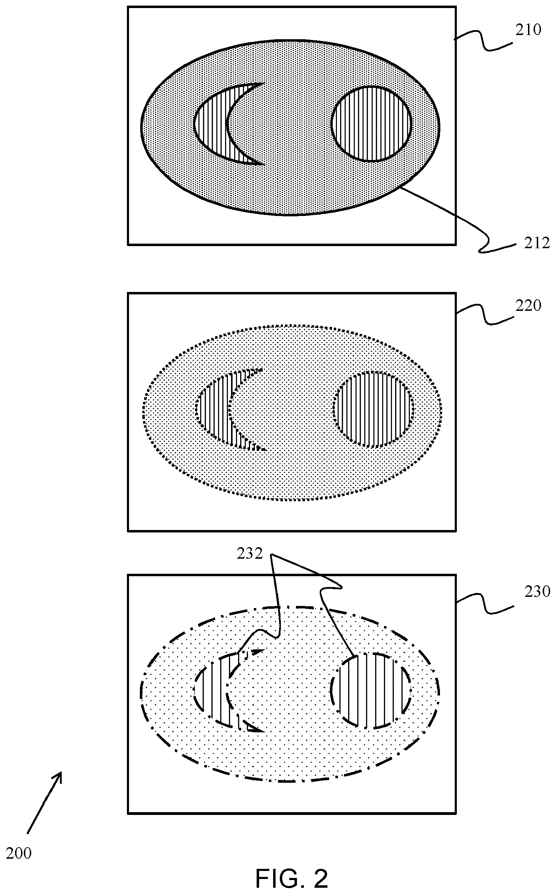

A computing system 118 serves as an operator console. The console 118 includes a human readable output device such as a monitor and an input device such as a keyboard, mouse, etc. Software resident on the console 118 allows the operator to interact with and/or operate the scanner 102 via a graphical user interface (GUI) or otherwise. The console 118 further includes a processor 120 (e.g., a microprocessor, a controller, a central processing unit, etc.) and a computer readable storage medium 122, which excludes non-transitory medium, and includes transitory medium such as a physical memory device, etc. The computer readable storage medium 122 includes instructions 124 for the operation of the imaging system and for at least performing the method described below with reference to Figure 2. The processor 120 is configured to execute the instructions 124. The processor 120 may additionally be configured to execute one or more computer readable instructions carried by a carrier wave, a signal and/or other transitory medium. In a variation, the processor 120 and the computer readable storage medium 122 are part of another computing system, which is separate from the computing system 118.

As described above, the acquisition of CT projection data, or sinogram data, at different X-ray tube voltages results in sets of CT projection data having different resolutions. The combination of sets of CT projection data having different resolutions results in image artifacts in the final spectral image. Figure 2 provides a schematic representation 200 of the difference between two sets of CT projection data, the two sets of CT projection data being acquired using different focal spot sizes, thereby simulating CT projection data sets acquired at different energy levels.

Figure 2 shows a first schematic image simulation 210, based on a first set of CT projection data, of a region 212 having several different tissues, or materials, represented by the different shapes within the region. The first set of CT projection data is acquired using a first focal spot size.

In addition, Figure 2 shows a second schematic image simulation 220, based on a second set of CT projection data, of the same region as the first schematic image simulation. The second set of CT projection data is acquired using a second focal spot size. The second focal spot size is 1.4mm and the first focal spot size is smaller than 1.4mm. Accordingly, the second schematic image simulation 220 represents a set of CT projection data acquired at a higher energy than the set of CT projection data represented by the first schematic image simulation 210. Further, the second schematic image simulation 220 represents a set of CT projection data having a lower resolution than the set of CT projection data represented by the first schematic image simulation 210.

Figure 2 shows a schematic difference image 230 representing the difference between the first schematic image simulation 210 and the second schematic image simulation 220 due only to the mismatch in focal spot size between the input sinograms. In practice, the differences between the first image simulation and the second image simulation are particularly significant at the boundaries 232 between different tissues. The significant differences between the two images due to the different focal spot sizes lead to image artifacts and to wrong quantitative values in the final spectral image.

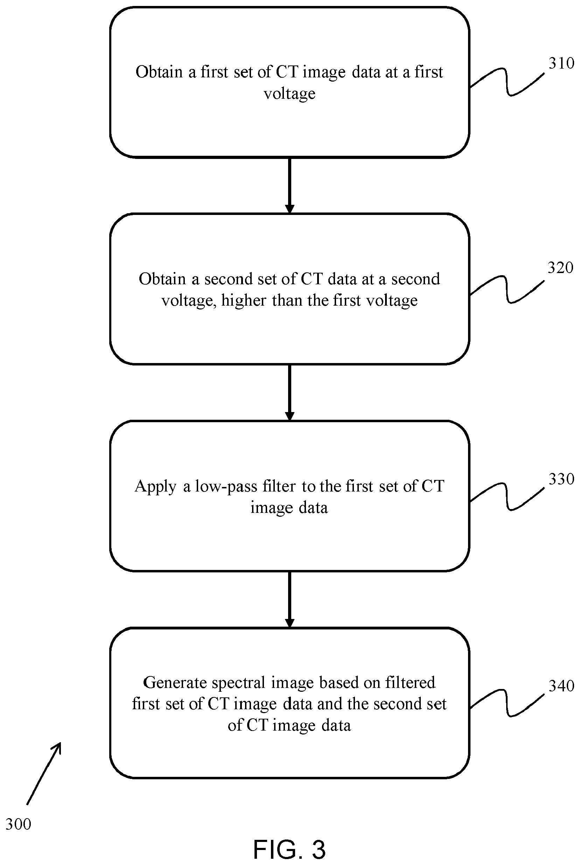

Figure 3 shows a method 300 for obtaining a spectral computed tomography, CT, image of a region of interest from CT projection data acquired by way of a CT imaging system.

It should be noted that the methods described herein may be performed by way of a processing unit within a CT imaging system in real time. Alternatively, the methods described herein may be performed on any suitable processing system after the CT projection data has been obtained on a separate system.

The method begins in step 310 by obtaining a first set of CT projection data. The first set of CT projection data may have been acquired by way of an X-ray tube operated at a first voltage, wherein the first set of CT projection data is representative of an image having a first resolution.

In step 320, a second set of CT projection data is obtained. The second set of CT projection data may have been acquired by way of an X-ray tube operated at a second voltage, the second voltage being higher than the first voltage. Due to the difference in voltage between the first voltage and the second voltage, the focal spot of the X-ray tube will be smaller for the first set of CT projection data than for the second set of CT projection data. Accordingly, the second set of CT projection data is representative of an image having a second resolution, wherein the second resolution is lower than the first resolution.

Steps 310 and 320 can be executed substantially in parallel, in an alternating mode, using alternately using different kVp settings.

In step 330, a low-pass filter to the first set of CT projection data, thereby generating a filtered first set of CT projection data, wherein the filtered first set of CT projection data is representative of an image having a resolution closer to the second resolution than the first resolution.

Put another way, the inventors have recognized that the resolutions of the two different projection data obtained during kVp switching may be aligned by applying a low-pass filter to the low energy kV sinogram. A low-pass filter eliminates high frequencies, which in the case of X-ray imaging affect the resolution of the sinogram. Thus, by applying a low-pass filter to the low energy set of CT projection data, i.e. the first set of CT projection data, it is possible to adapt the resolution of the low kV sinogram, which is caused by the reduced focal spot size, to match the resolution of the high kV sinogram, at least approximately.

It should be noted that the effect of focal spot blur on the CT projection data has a different distance dependence than that of detector blur, which is a common factor in CT imaging. Thus, the low-pass filter can only match a larger focal spot for a certain location of the imaging region along a ray defined between the radiation source and the detector. With the correct low-pass filter, both the low kV and the high kV sinograms may be adjusted to have the same resolution such that image artifacts in the final spectral CT image, caused by the resolution differences between the two data sets, may be eliminated or reduced.

In step 340, a spectral CT image is generated based on the filtered first set of CT projection data and the second set of CT projection data.

The spectral CT image may be generated from the filtered first set of CT projection data and the second set of projection data using any suitable means. For example, the projection data acquired with the first and the second kVp may be interpolated to a common sample grid and a set of basis functions is selected representing, for example, the characteristics of water and bone or describing photo-electric absorption and scattering. Then, for each sample point of the common sample grid, the attenuation at the two different kVp values can be attributed to a unique amount of water and bone at said sample point. This step of material decomposition results in two material sinograms, which can be reconstructed into a spectral CT image using standard reconstruction methods such as filtered backprojection or iterative reconstruction.

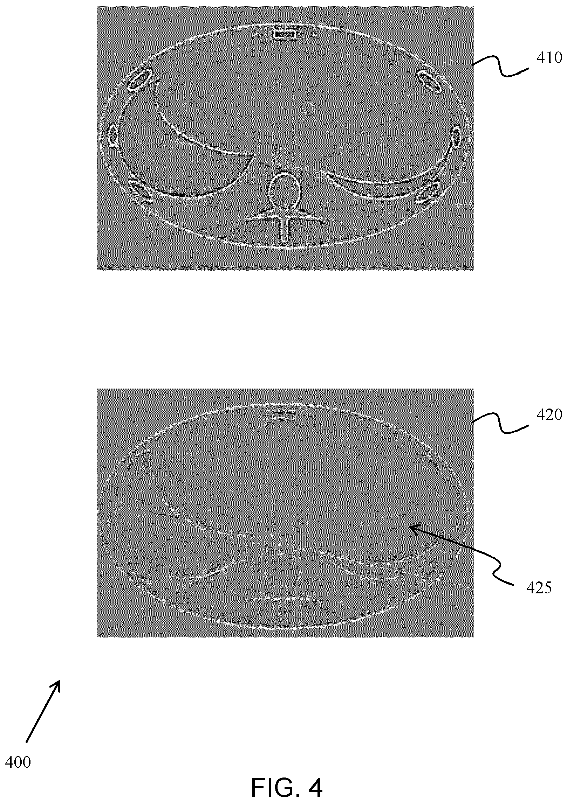

Figure 4 provides a visual representation 400 of the effectiveness of the low-pass filtering method described above. In this example the material basis functions are photo-electric absorption and scattering. Results are shown for the photo-electric image only.

In Figure 4, a first difference image 410 representing the difference between the ground truth and the generated material image without applying a low-pass filter to the first set of CT projection data. As can be seen in Figure 4, there are significant differences between the first and second sets of CT projection data.

Further, Figure 4 shows a second difference image 420 representing the difference between the ground truth and the material image obtained by the method described above with respect to Figure 3. Comparing the first and second difference images, it can clearly be seen that the differences between the CT projection data sets are significantly reduced following the application of the low-pass filter.

Apart from strongly reduced residual artefacts near strong edges, such as bone - soft tissue interfaces, it should be noted that the projection data within a tissue, such as inside the liver, becomes very accurate as shown by the empty region 425 in the second difference image.

In principle, a low-pass filter can be applied to the first set of CT projection data at different stages between obtaining the high and low kV sinograms and the reconstructed output images. The simplest and most intuitive method is to apply the low-pass filter to the sinograms directly after measuring the intensities, which means all of the following processing steps including the decomposition are applied to data with already equal resolutions.

Typically, several pre-processing steps are performed during the reconstruction of the spectral images from the first and second CT projection data sets. For example, the pre-processing steps may include: correcting for detector gain; correcting for offset; correcting for crosstalk; and correcting for afterglow. Additional examples of pre-processing steps may include: correcting for scattered and off-focal radiation. The first step after the pre-processing steps is typically the removal of noise from the CT projection data sets. The application of the low-pass filter may be applied to the first set of CT projection data between the pre-processing steps and the initial projection domain denoising. However, the low-pass filter may be applied between any of the pre-processing steps.

A low-pass filter may be designed to be convolved the obtained first set of CT projection data, i.e. the low kVp sinogram, with a filter kernel. In order to prevent the information of the different rows being mixed up, the filter may be one-dimensional, for example a three-point filter. As the resolution mismatch between the first and second CT projection data sets is typically small, a short low-pass filter may be sufficient. In order to obtain a sinogram with a lower resolution than the input sinogram, the values of the filter kernel must be positive. Put another way, in order to reduce the resolution of the first set of CT projection data, thereby bringing the resolution of the first set of CT projection data closer to the resolution of the second set of CT projection data, the values of the filter kernel should be positive.

The exact values of the chosen filter kernel that result in the correct resolution for the filtered first set of CT projection data is dependent on the size difference between the focal spots for the high and low kVp sinograms. The values of the kernel may be derived dynamically based on the detected focal spot size of the CT imaging system. Alternatively, a plurality of filter kernel values may be stored in a look-up table and selected based on the determined focal spot size.

In the examples of Figure 4, the size of the high kVp focal spot is 1.4 mm and the size of the low kV focal spot 0.9 mm. The applied filter kernel used to generate the second difference image 420 is [0.16, 0.68, 0.16]. Further improved results can be achieved if the filter kernel is optimized for each fan-angle of the CT imaging system as the projected focal spot size varies with the fan-angle of the CT imaging system. The values of the kernel may be altered based on the fan angle of the CT imaging system. Alternatively, a plurality of filter kernel values may be stored in a look-up table and selected based on the fan angle.

Further, detailed and time resolved information of the focal spot size of the CT imaging system from a "focal spot size" camera within the X-ray tube housing, or from the electronics for shaping the focal spot, may be deployed to filter both the CT projection data sets, i.e. the low and high kVp sinograms. In this way, a constant resolution may be provided for the whole data set and also compensate for drifts in the size or shape of the focal spots.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method (300) for obtaining a spectral computed tomography, CT, image of a region of interest from CT projection data acquired by way of a CT imaging system, the method comprising:
obtaining (310) a first set of CT projection data, acquired by way of an X-ray tube operated at a first voltage, wherein the first set of CT projection data is representative of an image having a first resolution;
obtaining (320) a second set of CT projection data, acquired by way of an X-ray tube operated at a second voltage, the second voltage being higher than the first voltage, wherein the second set of CT projection data is representative of an image having a second resolution, wherein the second resolution is lower than the first resolution;
applying (330) a low-pass filter to the first set of CT projection data, thereby generating a filtered first set of CT projection data, wherein the filtered first set of CT projection data is representative of an image having a resolution closer to the second resolution than the first resolution; and
generating (340) a spectral CT image based on the filtered first set of CT projection data and the second set of CT projection data.

2. A method (300) as claimed in claim 1, wherein applying (330) the low-pass filter to the first set of CT projection data comprises convolving the first set of CT projection data with a filter kernel.

3. A method (300) as claimed in claim 2, wherein the filter kernel is one dimensional.

4. A method (300) as claimed in any of claims 2 to 3, wherein the values of the filter kernel are positive.

5. A method (300) as claimed in any of claims 1 to 4, wherein the method further comprises:
determining a relationship between a fan-angle of the CT imaging system and a resolution difference between the first resolution and the second resolution based on the; and
adjusting the low-pass filter based on the determined relationship between the fan-angle and the resolution difference.

6. A method (300) as claimed in any of claims 1 to 5, wherein the first set of CT projection data and the second set of CT projection data are obtained by way of kVp switching.

7. A method (300) as claimed in any of claims 1 to 6, wherein the method further comprises applying a filter to the second set of CT projection data.

8. A method (300) as claimed in any of claims 1 to 7, wherein the region of interest has been provided with a contrast agent.

9. A method (300) as claimed in claim 8, wherein the contrast agent is an iodine-based contrast agent.

10. A computer program product comprising computer program code means which, when executed on a computing device having a processing system, cause the processing system to perform all of the steps of the method according to any of claims 1 to 7.

11. A processor (120) for use in a computed tomography, CT, imaging system (100), wherein the processor is adapted to:
obtain a first set of CT projection data, acquired from a region of interest by way of an X-ray tube operated at a first voltage, wherein the first set of CT projection data is representative of an image having a first resolution;
obtain a second set of CT projection data, acquired from the region of interest by way of an X-ray tube operated at a second voltage, the second voltage being higher than the first voltage, wherein the second set of CT projection data is representative of an image having a second resolution, wherein the second resolution is lower than the first resolution;
apply a low-pass filter to the first set of CT projection data, thereby generating a filtered first set of CT projection data, wherein the filtered first set of CT projection data is representative of an image having a resolution closer to the second resolution than the first resolution; and
generate a spectral CT image based on the filtered first set of CT projection data and the second set of CT projection data.

12. A computed tomography, CT, imaging system (100) adapted to obtain a spectral CT image of a subject, the system comprising:
processor (120) as claimed in claim 11;
a radiation source (112) comprising an X-ray tube, adapted to provide radiation to the subject; and
a detector (114) adapted to detect radiation generated by the radiation source.

13. A CT imaging system (100) as claimed in claim 12, wherein the processor (120) is adapted, when applying the low-pass filter to the first set of CT projection data, to convolve the first set of CT projection data with a filter kernel.

14. A CT imaging system (100) as claimed in any of claims 12 to 13, wherein the processor (120) is further adapted to:
determine a dependence of the resolution mismatch on the fan-angle of the CT imaging system; and
adjust the low-pass filter based on the determined dependence of the resolution mismatch on the fan-angle.

15. A CT imaging system (100) as claimed in any of claims 12 to 14, wherein the system further comprises a display for displaying the spectral CT image to a user.
